# EUROPEAN PATENT SPECIFICATION

(11) **EP 3 262 329 B1**
(45) Date of publication and mention of the grant of the patent: **10.04.2019**
(21) Application number: 15705829.8
(22) Date of filing: 23.02.2015
(51) Int. Cl.: F16K 31/50

(54) **VALVE OPERATOR ASSEMBLY WITH OPERABLE WHEEL**
VENTILBETÄTIGUNGSANORDNUNG MIT BEDIENBAREM RAD
ENSEMBLE ACTIONNEUR DE SOUPAPE À ROUE MANIPULABLE

(43) Date of publication of application: 03.01.2018
(73) Proprietor: Aktiebolaget SKF, 415 50 Göteborg (SE)
(72) Inventor: DUBUS, Jérôme, F-37520 La Riche (FR); BOCH, Christian, F-73000 Chambery (FR)
(74) Representative: Kuhstrebe, Jochen
(86) International application number: PCT/EP2015/053736
(87) International publication number: WO 2016/134743

(56) References cited:
- US-A- 4 064 904
- US-A- 4 592 534
- US-B1- 6 401 747

## Description

The present invention relates to the fields of valves and manually operable valves, for instance gate valves, control or regulation valves or chokes valves. More particularly, the invention relates to a valve operator assembly for a gate valve.

Valves are used in a variety of industries to control the flow of fluids. In particular, gate valves are used extensively in the oil and gas industry to control the flow of produced fluids at various stages of production. Most gate valves used in this industry comprise a valve body having a longitudinal flow bore and a transverse gate cavity that intersects the flow bore. A gate having a gate opening extending transversely therethrough is disposed in the gate cavity. A valve stem is provided for moving the gate between an open position, in which the gate opening is aligned with the flow bore, and a closed position, in which the gate opening is offset from the flow bore. The gate cavity of the valve body is covered by a bonnet having an axial bore transverse to the flow through which passes the valve stem.

Such a gate valve is associated to a valve operator assembly for selectively driving the valve stem up and down in order to close and open the gate valve. The valve operator assembly generally comprises a transmission mechanism to convert the rotational motion of a drive input into axial motion of the valve stem. To quickly open and close the gate valve with a minimum number of turns, the transmission mechanism may be a ball screw mechanism or a planetary roller screw mechanism in order to reduce the operating torque, for instance manual hand-wheel torque or powered with electric, hydraulic or pneumatic drive for surface valves or with remote operating vehicle (ROV) torque tool or electric or hydraulic actuation for subsea valves. For more details, it is possible for example to refer to the patent EP-B1-1 419 334 (SKF).

Other valve operator assemblies relevant to the subject-matter of the independent claim are known from US 4064904 A, US 4592534 A and US 6401747 B1.

Generally, the required axial space for a conventional valve operator assembly is large.

One aim of the present invention is to overcome this drawback.

It is a particular object of the present invention to provide a valve operator assembly for valve, for instance gate valve, control or regulation valve or choke valve, having a good axial compactness.

It is also an object of the present invention to provide a valve operator assembly with a limited number of components.

In one embodiment, the valve operator assembly is provided for a valve comprising a valve body and a valve translating member axially moveable. The assembly comprises a housing adapted to be mounted on the valve, an operable wheel rotatably mounted with respect to said housing, and a transmission mechanism comprising a translating element adapted to be connected to the valve translating member of the valve and provided with a thread, and a rotating element connected to the wheel and provided with a thread. Said transmission mechanism is adapted to convert applied rotation of the wheel into axial translation of said translating element. The wheel is directly mounted on the rotating element of the transmission mechanism.

Thanks to the direct connection of the wheel on the rotating element of the transmission mechanism, the required axial space for the valve operator assembly is limited. Besides, the number of components of the assembly is also reduced. The wheel is coupled directly to the rotating element of the transmission mechanism. No means are interposed therebetween, such as an adapter sleeve or adapter shaft axially interposed between the wheel and the rotating element of the transmission mechanism.

Preferably, the wheel is directly mounted on the outer surface of the rotating element. Advantageously, the wheel is directly mounted on a part of the outer surface of the rotating element which is located outside of the housing.

In one embodiment, the wheel comprises a mounting hub directly mounted on the rotating element and an operable rim connected to said hub. The wheel may be a hand-wheel. Alternatively, the wheel may be an electro-mechanical wheel.

The assembly may further comprise locking means disposed on the rotating element and the wheel to secure said wheel to the rotating element. In one embodiment, the locking means comprise at least one key engaged in an inner keyway of the rotating element and in a corresponding outer keyway of the wheel. Alternatively or in combination, the locking means may comprise at least one screw extending into the wheel and into the rotating element. Said screw may extend radially or axially.

The transmission mechanism may comprise a screw provided with an outer thread and a nut surrounding and coaxial with said screw, said nut being provided with an inner thread. In this case, the screw forms the translating element and the nut forms the rotating element, or vice versa. In one embodiment, the transmission mechanism further comprises rolling elements radially provided between the screw and the nut.

The invention also relates to a valve comprising a valve body, a valve translating member axially moveable and a valve operator assembly as previously defined.

The present invention and its advantages will be better understood by studying the detailed description of specific embodiments given by way of non-limiting examples and illustrated by the appended drawings on which:
- Figure 1 is a cross-section of a valve operator assembly for gate valve according to a first example of the invention,
- Figure 2 is a detail view of Figure 1,
- Figure 3 is a section on III-III of Figure 1,
- Figure 4 is a detail view in cross-section on IV-IV of Figure 3,
- Figure 5 is a cross-section of a valve operator assembly according to a second example shown for illustrative purposes only, and
- Figure 6 is a section on VI-VI of Figure 5.

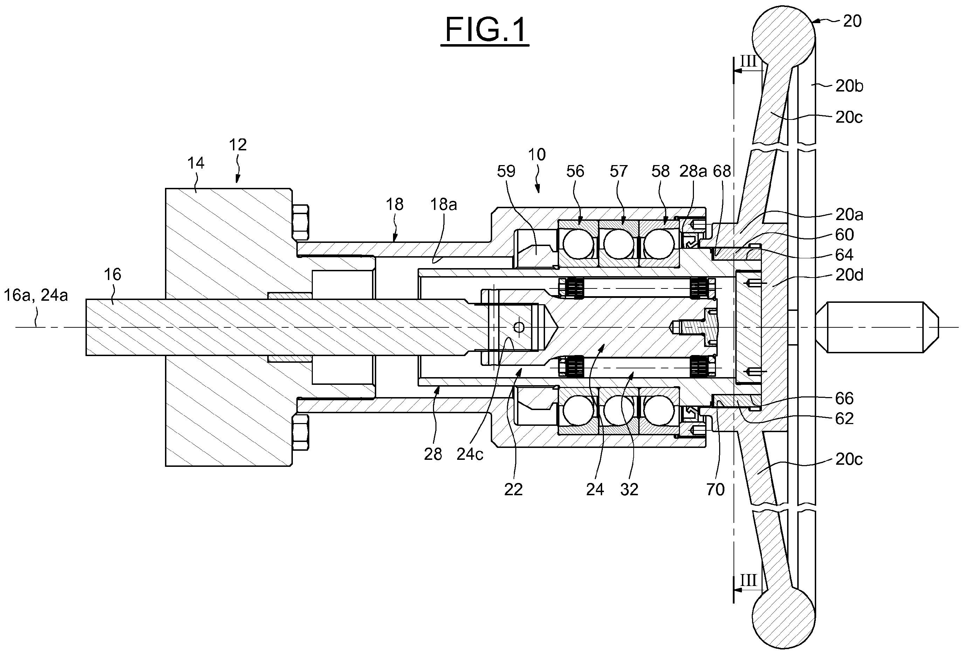

A valve operator assembly 10 as shown on Figure 1 is adapted for a gate valve 12 provided with a bonnet 14, a valve body (not shown) covered by said bonnet and a moveable valve stem 16 with an axis 16a. Conventionally, the valve body has a flow bore and a transverse gate cavity that intersects the flow bore. The gate valve also comprises a gate having a gate opening extending transversely therethrough is disposed in the gate cavity. For more detail on such a gate valve, it could be referred to EP-B1-1 419 334 (SKF).

The valve operator assembly 10 comprises a tubular housing 18 mounted on the bonnet 14 of the gate valve, an input operable wheel 20 rotatably mounted with respect to said housing, and an inverted roller screw mechanism 22 interposed between said wheel and the valve stem 16 of said valve to convert a rotational motion of the wheel 20 into axial motion of the valve stem. The inverted roller screw mechanism 22 is mounted into a bore 18a of the housing and is connected to the wheel 20. One axial end of the housing 18 is secured to the bonnet 14 by threads or bolts. In the illustrated example, the bore 18a has a stepped form. Alternatively, the bore 18a may have different shape.

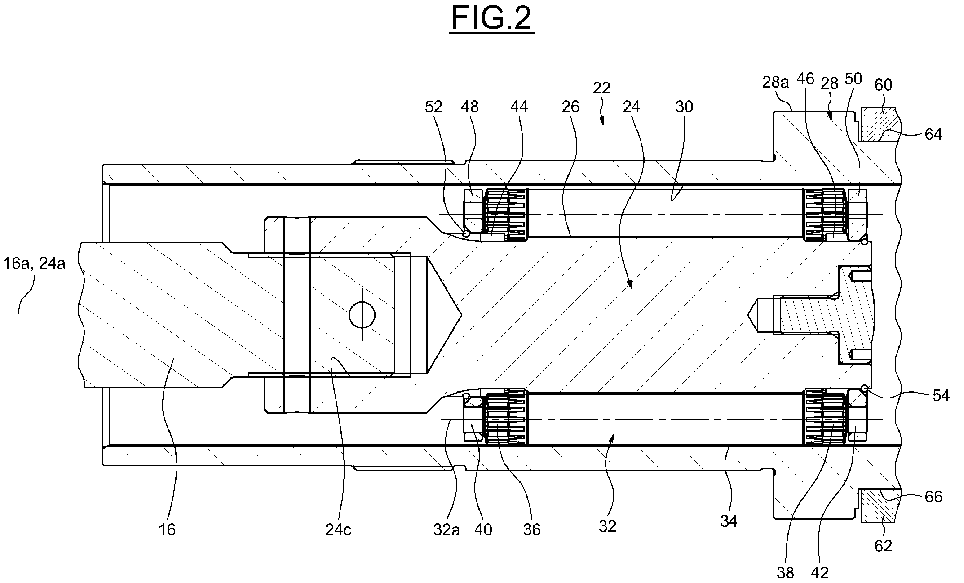

As shown more clearly on Figure 2, the mechanism 22 comprises a screw 24, with an axis 24a coaxial with the axis of the valve stem, provided with an outer thread 26, a nut 28 mounted coaxially about the screw 24 and provided with an inner thread 30, the internal diameter of which is greater than the external diameter of the outer thread 26, and a plurality of longitudinal rollers 32 arranged radially between the screw 24 and the nut 28. The screw 24 extends longitudinally through a cylindrical bore of the nut 28 on which the inner thread 30 is formed. The lead of the outer thread 26 of the screw is constant. The nut 28 has a tubular form and is elongated to accommodate the full extent of screw travel. The nut 28 is made in one part. The nut 28 extends axially inside the housing 18 and axially protrudes outwards.

The rollers 32 are identical to each other and are distributed regularly around the screw 24. Each roller 32 extends along an axis 32a which is coaxial with the axis 24a of the screw and comprises an outer thread 34 engaging the thread 26 of the screw and the thread 30 of the nut. Each roller 32 also comprises, at each axial end, outer gear teeth 36, 38 extending axially outwards the outer thread 34 and which are themselves extended axially by a cylindrical stud 40, 42 extending outwards. Each gear teeth 36, 38 are axially located between the associated stud 40, 42 and the outer thread 34. The outer thread 34 of each roller is axially located between the two gears 36, 38.

The roller screw mechanism 22 also comprises two annular gear wheels 44, 46 provided on the outer surface of the screw 24 and each comprising outer gear teeth meshing the gear teeth 36, 38 respectively of the rollers 32 for the synchronization thereof. Each gear wheel 44, 46 is axially located near to an end of the outer thread 26 of the screw. Said outer thread 26 is axially located between the two gear wheels 44, 46. In the disclosed embodiment, the gear wheels 44, 46 are formed directly on the outer surface of the screw 24. Alternatively, the gear wheels may be separate parts which are fixed onto the screw 24.

The mechanism 22 further comprises two annular guides or spacer rings 48, 50 disposed on the outer surface of the screw 24. Said spacer rings 48, 50 are radially disposed between the screw 24 and the inner thread 30 of the nut without contact with said thread. Each spacer ring 48, 50 is mounted on the outer surface of the screw 24 axially next to the associated gear wheel 44, 46. Each spacer ring 48, 50 is axially offset towards the outside of the nut 28 with regard to the associated gear wheel 44, 46. Each spacer ring 48, 50 comprises a plurality of cylindrical through-recesses (not referenced) which are distributed regularly in the circumferential direction and inside which the studs 40, 42 of the rollers are housed. The spacer rings 48, 50 enable the rollers 32 to be carried and the regular circumferential spacing thereof to be kept. The mechanism 22 further comprises elastic retainer rings 52, 54 each mounted in a groove (not referenced) formed on the outer surface of the screw 24 in order to axially hold the corresponding spacer ring 48, 50.

Referring once again to Figure 1, axially on the side opposite to the wheel 20, a recess 24c is formed on a frontal radial surface of the screw 12 and into which is mounted an end of the valve stem 16 of the gate valve. The valve stem 16 is connected to the screw 24 by any appropriate means, for example by threads and/or a pin and/or a clamping means and/or a T-slot.

The valve operator assembly 10 also comprises rolling bearings 56 to 58 to guide the rotation of the nut 28 of the inverted roller screw mechanism. The rolling bearings 56 to 58 are radially mounted between the outer surface 28a of the nut 28 and the stepped bore 18a of the housing. The rolling bearings 56 to 58 are mounted radially in contact with the outer surface 28a of the nut and a large diameter portion of the stepped bore 18a of the housing. In the disclosed example, the rolling bearings 56 to 58 are angular contact thrust ball bearings and are disposed axially in contact one to another. Alternatively, the bearing could be of another types, for example tapper roller bearings, or any type of thrust rolling bearings or radial bearings with balls or rollers.

A retaining ring 59 is secured on the outer surface 28a of the nut and axially bears against the rolling bearing 56. Axially on the opposite side, the rolling bearing 58 is axially mounted against a radial shoulder (not referenced) of the outer surface 28a of the nut. The flange is axially located at an axial end of the nut. In the disclosed example, the outer surface 28a of the nut has a stepped form. Alternatively, the outer surface 28a may have different shape.

The rotational drive wheel 20 is directly mounted on the nut 28 of the transmission mechanism with no interposition of additional element therebetween. The wheel 20 is mounted in direct radial contact with the nut 28. The wheel 20 is directly mounted on the outer surface 28a of the nut. The wheel 20 is directly mounted on a part of the outer surface 28a which is located outside of the housing 18. As will be described later, the wheel 20 is directly secured to the nut 28.

The wheel 20 comprises an annular mounting hub 20a directly mounted on the outer surface 28a of the nut and an operable rim 20b connected to said hub. The bore of the hub 20a is mounted in radial contact with the outer surface 28a of the nut. The bore of the hub 20a forms the bore of the wheel 20. The operable rim 20b has here a circular form. In the illustrated example, the operable rim 20b is adapted to be manually operated. Alternatively, the rim of the wheel 20 may be automatically operated with electric, hydraulic or pneumatic drive.

The wheel 20 further comprises a plurality of radial arms or branches 20c connecting the hub 20a to the rim 20b. The branches 20c extend radially outwards from the hub 20a. The wheel 20 also comprises a radial portion 20d extending radially inwards the hub 20a. The radial portion 20d bears axially against the end of the nut 28. The wheel 20 is made in one single part.

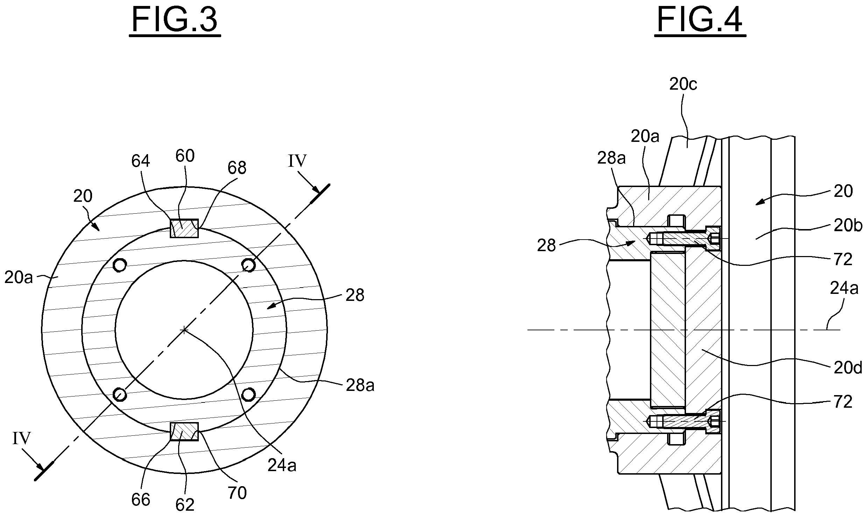

As shown on Figures 1 and 3, the valve operator assembly 10 further comprises two keys 60, 62 radially provided between the nut 28 and the wheel 20 to rotatably connect said nut and wheel. Each key 60, 62 engages into an axial inner keyway 64, 66 provided on the outer surface 28a of the nut, and into a corresponding axial outer keyway 68, 70 formed on the bore of the wheel 20. Each outer keyway 68, 70 of the wheel radially faces the corresponding inner keyway 64, 66 of the nut. The keyways 64 to 70 extend axially. Each inner keyway 64, 66 is formed radially inwards from the outer surface 28a of the nut. Each keyway 64, 66 extends into the thickness of the nut 28. Each keyway 64, 66 is formed on a limited length of the outer surface 28a of the nut. Similarly, each outer keyway 68, 70 is formed radially outwards from the bore of the wheel 20. Each keyway 68, 70 extends into the thickness of the hub 20a of the wheel. Each keyway 68, 70 is formed on a limited length of bore of the hub 20a. The keyways 64 to 70 are each shaped in a form of a groove. In the illustrated example, two keys 60, 62 are provided and diametrically opposed. Alternatively, the number of keys may be increased or reduced.

As shown on Figure 3, the valve operator assembly 10 also comprises a plurality of screws 72 to axially secure the wheel 20 to the nut 28. The screws 72 extend axially into the wheel 20 and the nut 28. The screws 72 extend into the radial portion 20d of the wheel and are each screwed into an inner axial thread (not referenced) made into the thickness of the nut 28. In the illustrated example, four screws 72 are provided. Alternatively, the number of screws may be increased or reduced. The keys 60, 62 and the screws 72 form locking means provided on the wheel 20 and the nut 28 to secure said wheel to the nut.

When an operator applies a torque on the wheel 20, this torque is transmitted directly to the nut 28 of the inverted roller screw mechanism. With the rotation of the nut 28, the rollers 32 rotate on themselves about the screw 24 and move axially and additionally rotate in the nut 28. The rollers 32 are rotationally guided by outer gear wheels 44, 46 provided on the screw and meshing with the gear teeth of the rollers. Both the rollers 32 and the screw 24 are axially or longitudinally moveable into the nut 28. Accordingly, the rotational motion of the wheel 20 is converted into a displacement of the screw 24.

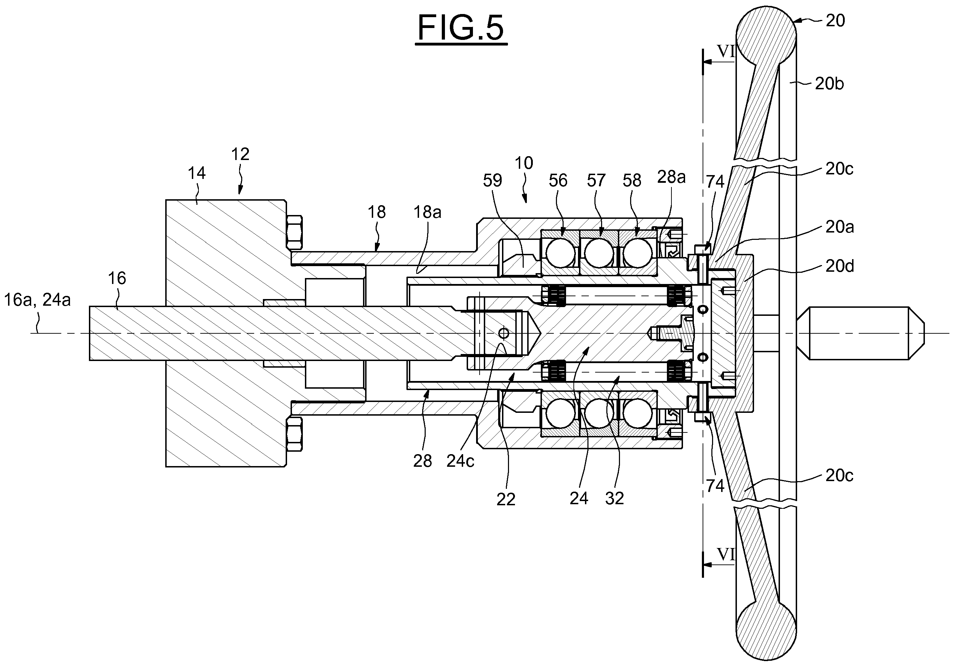

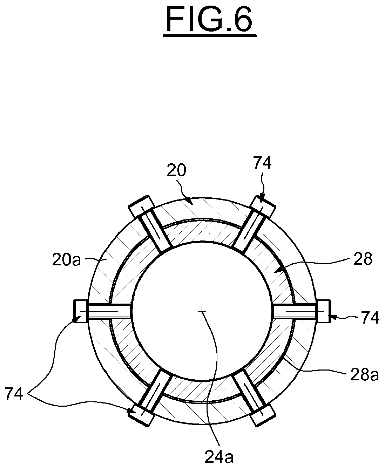

In the second example serving illustrative purposes only and shown on Figures 5 and 6, in which identical parts are given identical references, the valve operator assembly 10 only differs in that the locking means provided to secure the wheel 20 to nut 28 are of different type. In this example, the assembly 10 comprises a plurality of screws 74 to angularly connect and axially secure the wheel 20 to nut 28. The screws 74 extend radially into the wheel 20 and the nut 28. The screws 72 extend into the hub 20a of the wheel and are each screwed into an inner radial thread (not referenced) made into the thickness of the nut 28. In the illustrated example, six screws 74 are provided. Alternatively, the number of screws may be increased or reduced. In another variant, it could also be possible to foresee a set of axial screws as shown in the first example but without provision of keys.

In the described examples, the wheel is connected or coupled directly to the nut of the transmission mechanism with keys and screws or only with screws. Alternatively, it could be possible to foresee another type of direct connection between the wheel and the nut, for example by splines or teeth provided on the outer surface of the nut and extending into corresponding grooves formed into the bore of the wheel. In another variant, the wheel may be directly secured to the nut by any other appropriate means, for instance by screwing, press-fitting, gluing, or welding, etc.

The invention has been illustrated on the basis of a valve operator assembly for gate valve comprising an inverted roller screw mechanism. The invention can also be applied to a valve operator assembly having other type of roller screw mechanism such as standard planetary roller screw mechanism. The invention can also be applied to a valve operator assembly having a standard or an inverted ball screw mechanism. Otherwise, the invention can also be applied to a valve operator assembly having other type of transmission mechanism adapted to convert a rotation into a linear movement, for instance a direct threaded connection. In this case, the outer thread of the screw engages directly the inner thread of the nut without interposition of rolling elements. However, such transmission mechanism requires large actuation forces.

Although the invention has been illustrated on the basis of a valve operator comprising a screw connected to the valve stem of the gate and a wheel directly mounted on the nut, it should be understood that the invention can be applied with a wheel directly mounted on the screw and a nut connected to the valve stem. In this case, the nut acts as the translating element and the screw acts as the rotating element.

Although the invention has been illustrated on the basis of a valve operator assembly for gate valve, it should be understood that the invention can also be used with other types of valves, for instance control or regulation valves or choke valves. The wheel may be operable manually or automatically for example with electric, hydraulic or pneumatic drive. The valve operator assembly may be used for instance with a surface gate or a subsea valve gate which may be actuated by a remote operating vehicle (ROV) torque tool or an actuator.

## Claims

1. Valve operator assembly for valve comprising a valve body and a valve translating member axially moveable, the assembly comprising:
- a housing (18) adapted to be mounted on the valve,
- an operable wheel (20) rotatably mounted with respect to said housing, and comprising a mounting hub (20a) and an operable rim (20b) connected to said hub (20a),
- a transmission mechanism (22) comprising a translating element (24) adapted to be connected to the valve translating member of the valve and provided with a thread, and a rotating element (28) connected to the wheel (20) and provided with a thread, said transmission mechanism being adapted to convert applied rotation of the wheel into axial translation of said translating element, the mounting hub (20a) of the wheel (20) being directly mounted on an outer surface (28a) of the rotating element (28) of the transmission mechanism, and
- locking means disposed on the rotating element (28) and the wheel (20) to secure said wheel to the rotating element, said locking means comprising at least one screw (72) extending axially into the wheel (20) and the rotating element (28),
**characterized in that** the locking means further comprise at least one key (60, 62) engaged in an inner keyway (64, 66) of the rotating element (28) and in a corresponding outer keyway (68, 70) of the wheel (20), said outer keyway (68, 70) of the wheel radially (20) facing the corresponding inner keyway (64, 66) of the rotating element (28), said inner keyway (64, 66) being formed radially inwards from the outer surface (28a) of the rotating element (28), extending axially into the thickness of the rotating element (28), and being formed on a limited length of the outer surface (28a) of the rotating element (28), and said outer keyway (68, 70) being formed radially outwards from a bore of the hub (20a) of wheel (20), extending axially into the thickness of the hub (20a) of wheel (20), and being formed on a limited length of bore of the hub (20a).

2. Valve operator assembly according to claim 1, wherein the wheel (20) is directly mounted on a part of the outer surface (28a) which is located outside of the housing (18).

3. Valve operator assembly according to any of the preceding claims, wherein the wheel (20) is a hand-wheel.

4. Valve operator assembly according to any of the preceding claims, wherein the transmission mechanism (22) comprises a screw (24) provided with an outer thread and a nut (28) surrounding and coaxial with said screw, said nut being provided with an inner thread.

5. Valve operator assembly according to claim 4, wherein the screw (24) forms the translating element and the nut (28) forms the rotating element, or vice versa.

6. Valve operator assembly according to claim 4 or 5, wherein the transmission mechanism (22) further comprises rolling elements radially provided between the screw and the nut.

7. Valve comprising a valve body, a valve translating member (16) axially moveable and a valve operator assembly (10) according to any of the preceding claims.

## Patentansprüche

1. Ventilbetätigungsanordnung für ein Ventil, das einen Ventilkörper und ein axial bewegbares Ventilübersetzungselement umfasst, wobei die Anordnung Folgendes umfasst:
- ein Gehäuse (18), das dazu ausgelegt ist, an dem Ventil montiert zu sein,
- ein betätigbares Rad (20), das in Bezug auf das Gehäuse drehbar montiert ist und eine Montagenabe (20a) und einen betätigbaren Kranz (20b) umfasst, der mit der Nabe (20a) verbunden ist,
- einen Übertragungsmechanismus (22), der ein Übersetzungselement (24) umfasst, das dazu ausgelegt ist, mit dem Ventilübersetzungselement des Ventils verbunden zu werden und mit einem Gewinde versehen ist, und ein drehendes Element (28), das mit dem Rad (20) verbunden und mit einem Gewinde versehen ist, wobei der Übertragungsmechanismus dazu ausgelegt ist, eine angewandte Drehung des Rades in eine axiale Übersetzung des Übersetzungselements umzuwandeln, wobei die Montagenabe (20a) des Rades (20) direkt an einer äußeren Oberfläche (28a) des drehenden Elements (28) des Übertragungsmechanismus montiert ist, und
- Sperrmittel, die auf dem drehenden Element (28) und dem Rad (20) angeordnet sind, um das Rad an dem drehenden Element zu sichern, wobei die Sperrmittel mindestens eine Schraube (72) umfassen, die sich axial in das Rad (20) und das drehende Element (28) erstreckt,
**dadurch gekennzeichnet, dass** die Sperrmittel ferner mindestens einen Schlüssel (60, 62) umfassen, der in eine innere Keilnut (64, 66) des drehenden Elements (28) und in eine entsprechende äußere Keilnut (68, 70) des Rades (20) eingreift, wobei die äußere Keilnut (68, 70) des Rades (20) der entsprechenden inneren Keilnut (64, 66) des drehenden Elements (28) radial zugewandt ist, wobei die innere Keilnut (64, 66) von der äußeren Oberfläche (28a) des drehenden Elements (28) radial nach innen ausgebildet ist, sich axial in die Dicke des drehenden Elements (28) erstreckt und auf einer begrenzten Länge der äußeren Oberfläche (28a) des drehenden Elements (28) ausgebildet ist, und wobei die äußere Keilnut (68, 70) von einer Bohrung der Nabe (20a) des Rades (20) radial nach außen ausgebildet ist, sich axial in die Dicke der Nabe (20a) des Rades (20) erstreckt und auf einer begrenzten Länge der Bohrung der Nabe (20a) ausgebildet ist.

2. Ventilbetätigungsanordnung nach Anspruch 1, wobei das Rad (20) direkt auf einem Teil der äußeren Oberfläche (28a), die sich außerhalb des Gehäuses (18) befindet, montiert ist.

3. Ventilbetätigungsanordnung nach einem der vorangehenden Ansprüche, wobei das Rad (20) ein Handrad ist.

4. Ventilbetätigungsanordnung nach einem der vorangehenden Ansprüche, wobei der Übertragungsmechanismus (22) eine Schraube (24) umfasst, die mit einem Außengewinde versehen ist, und eine Mutter (28), die die Schraube umgibt und koaxial zu der Schraube verläuft, wobei die Mutter mit einem Innengewinde versehen ist.

5. Ventilbetätigungsanordnung nach Anspruch 4, wobei die Schraube (24) das Übersetzungselement bildet und die Mutter (28) das drehende Element bildet, oder umgekehrt.

6. Ventilbetätigungsanordnung nach Anspruch 4 oder 5, wobei der Übertragungsmechanismus (22) ferner Rollenelemente umfasst, die radial zwischen der Schraube und der Mutter bereitgestellt sind.

7. Ventil, das einen Ventilkörper, ein axial bewegbares Ventilübersetzungselement (16) und eine Ventilbetätigungsanordnung (10) nach einem der vorangehenden Ansprüche umfasst.

## Revendications

1. Ensemble actionneur de soupape pour soupape comprenant un corps de soupape et un élément de translation de soupape mobile axialement, l'ensemble comprenant:
- un boîtier (18) adapté pour être monté sur la soupape,
- une roue manipulable (20) montée de manière rotative par rapport audit boîtier, et comprenant un moyeu de montage (20a) et une jante manipulable (20b) reliée audit moyeu (20a),
- un mécanisme de transmission (22) comprenant un élément de translation (24) adapté pour être connecté à l'élément de translation de soupape de la soupape et muni d'un filetage, et un élément rotatif (28) relié à la roue (20) et muni d'un filetage, ledit mécanisme de transmission étant adapté pour transformer la rotation appliquée de la roue en un mouvement de translation axiale dudit élément de translation, le moyeu de montage (20a) de la roue (20) étant directement monté sur une surface extérieure (28a) de l'élément rotatif (28) du mécanisme de transmission, et
- des moyens de verrouillage disposés sur l'élément rotatif (28) et la roue (20) pour fixer ladite roue à l'élément rotatif, lesdits moyens de verrouillage comprenant au moins une vis (72) s'étendant axialement dans la roue (20) et l'élément rotatif (28),
**caractérisé en ce que** les moyens de verrouillage comprennent en outre au moins une clavette (60, 62) engagée dans une rainure de clavette intérieure (64, 66) de l'élément rotatif (28) et dans une rainure de clavette extérieure correspondante (68, 70) de la roue (20), ladite rainure de clavette extérieure (68, 70) de la roue (20) étant tournée radialement vers la rainure de clavette intérieure correspondante (64, 66) de l'élément rotatif (28), ladite rainure de clavette intérieure (64, 66) étant formée radialement vers l'intérieur à partir de la surface extérieure (28a) de l'élément rotatif (28), s'étendant axialement dans l'épaisseur de l'élément rotatif (28) et étant formée sur une longueur limitée de la surface extérieure (28a) de l'élément rotatif (28) et ladite rainure de clavette extérieure (68, 70) étant formée radialement vers l'extérieur à partir d'un alésage du moyeu (20a) de la roue (20), s'étendant axialement dans l'épaisseur du moyeu (20a) de la roue (20), et étant formée sur une longueur limitée de l'alésage du moyeu (20a) .

2. Ensemble actionneur de soupape selon la revendication 1, dans lequel la roue (20) est montée directement sur une partie de la surface extérieure (28a) qui est située à l'extérieur du boîtier (18).

3. Ensemble actionneur de soupape selon l'une quelconque des revendications précédentes, dans lequel la roue (20) est un volant.

4. Ensemble actionneur de soupape selon l'une quelconque des revendications précédentes, dans lequel le mécanisme de transmission (22) comprend une vis (24) pourvue d'un filetage extérieur et d'un écrou (28) entourant ladite vis et coaxial à celle-ci, ledit écrou étant pourvu d'un filetage intérieur.

5. Ensemble actionneur de soupape selon la revendication 4, dans lequel la vis (24) forme l'élément de translation et l'écrou (28) forme l'élément rotatif, ou vice versa.

6. Ensemble actionneur de soupape selon la revendication 4 ou 5, dans lequel le mécanisme de transmission (22) comprend en outre des éléments roulants disposés radialement entre la vis et l'écrou.

7. Soupape comprenant un corps de soupape, un élément de translation de soupape (16) mobile axialement et un ensemble actionneur de soupape (10) selon l'une quelconque des revendications précédentes.
